# EUROPÄISCHE PATENTSCHRIFT

(11) **EP 4 386 124 B1**
(45) Veröffentlichungstag und Bekanntmachung des Hinweises auf die Patenterteilung: **06.08.2025**
(21) Anmeldenummer: 23212274.7
(22) Anmeldetag: 27.11.2023
(51) Int. Cl.: D06F 34/05, G06F 3/16, H04W 4/02, H04L 12/28

(54) **VERFAHREN UND VORRICHTUNG ZUM BETREIBEN MINDESTENS EINES HAUSHALTSGERÄTS UND HAUSHALTSGERÄT**
METHOD AND DEVICE FOR OPERATING AT LEAST ONE DOMESTIC APPLIANCE AND DOMESTIC APPLIANCE
PROCÉDÉ ET DISPOSITIF POUR FAIRE FONCTIONNER AU MOINS UN APPAREIL MÉNAGER ET APPAREIL MÉNAGER

(30) Priorität: 15.12.2022 BE 202206020
(43) Veröffentlichungstag der Anmeldung: 19.06.2024
(73) Patentinhaber: Miele & Cie. KG, 33332 Gütersloh (DE)
(72) Erfinder: Carsten, Daniel, 33615 Bielefeld (DE)

(56) Entgegenhaltungen:
- WO-A1-2022/002687
- US-A1- 2017 026 506
- US-A1- 2019 369 577

## Beschreibung

Die Erfindung betrifft ein Verfahren zum Betreiben mindestens eines Haushaltgeräts, eine Vorrichtung zum Betreiben mindestens eines Haushaltgeräts und ein Haushaltgerät.

Die WO2022002687A1 beschreibt ein Verfahren zum sicheren Steuern eines Haushaltgeräts per Sprache. Darin wird eine externe Steuervorrichtung genutzt, die erkennt, dass sich der Nutzer in Sichtweite der Steuervorrichtung befindet und die Steuervorrichtung selbst wiederum in Sichtweite des zu steuernden Haushaltgeräts. Daraufhin darf der Nutzer sicherheitsrelevante Funktionen, die eine Beaufsichtigung erfordern, per Sprache bedienen.

US 2017/026506 A1 offenbart ein Verfahren zum Steuern einer Mehrzahl von Haushaltsgeräten mithilfe einer tragbaren Bedienvorrichtung, welche mit den Haushaltsgeräten drahtlos kommuniziert und hierbei ein Steuersignal an die Haushaltsgeräte übermittelt, mit welchem die Haushaltsgeräte gemeinsam zwischen einem Zuhause-Modus und einem Nicht-Zuhause-Modus umgeschaltet werden.

Der Erfindung stellt sich die Aufgabe, ein verbessertes Verfahren zum Betreiben mindestens eines Haushaltgeräts, eine verbesserte Vorrichtung zum Betreiben mindestens eines Haushaltgeräts und ein verbessertes Haushaltgerät bereitzustellen.

Erfindungsgemäß wird diese Aufgabe durch ein Verfahren zum Betreiben mindestens eines Haushaltgeräts, durch eine Vorrichtung zum Betreiben mindestens eines Haushaltgeräts und durch ein Haushaltgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass ein Nutzer von einem Haushaltgerät aus alle in Sichtweite befindlichen Haushaltgeräte bzw. ein beliebiges in Sichtweite befindliches Haushaltgerät per Sprache bedienen kann, auch solche Funktionen, die einen beaufsichtigten Betrieb vorsehen, sofern er an dem ersten Haushaltgerät durch Aktivieren, genauer gesagt physisches Aktivieren, eines Sprachassistenten seine Präsenz im Raum bzw. an dem ersten Haushaltgerät sichergestellt bzw. bestätigt hat. Der Nutzer kann von dem Haushaltgerät aus, an dem er sich gerade befindet oder dem er am nächsten steht, den Sprachassistenten durch Drücken einer Taste aktivieren und alle anderen in Sichtweite befindlichen Haushaltgeräte sicher per Sprache bedienen, auch sicherheitsrelevante Funktion wie das Ein- und Ausschalten eines Kochfeldes.

Ein Verfahren zum Betreiben mindestens eines Haushaltgeräts umfasst folgende Schritte: Ausgeben eines Aktivierungssignals zum Aktivieren einer Sprachassistenzvorrichtung ansprechend auf ein Präsenzsignal von einer durch einen Nutzer physisch betätigten Nutzerschnittstelle eines betätigten Haushaltgeräts, wobei das Präsenzsignal eine Präsenz des Nutzers benachbart zu dem betätigten Haushaltgerät repräsentiert;

Einlesen eines Sprachbefehlssignals von der aktivierten Sprachassistenzvorrichtung, wobei das Sprachbefehlssignal einen Sprachbefehl des Nutzers zum Betreiben eines ausgewählten Haushaltgeräts repräsentiert;

Bestimmen, ob das ausgewählte Haushaltgerät in einer vordefinierten Positionsbeziehung relativ zu dem betätigten Haushaltgerät angeordnet ist, unter Verwendung von Lokalisierungsdaten von einem Funkmodul des betätigten Haushaltgeräts und/oder des ausgewählten Haushaltgeräts; und

Bewirken eines Betriebs des ausgewählten Haushaltgeräts unter Verwendung des Sprachbefehlssignals, wenn im Schritt des Bestimmens bestimmt wird, dass das ausgewählte Haushaltgerät in der vordefinierten Positionsbeziehung relativ zu dem betätigten Haushaltgerät angeordnet ist.

Das Verfahren kann ausführbar sein, um einen beaufsichtigten Betrieb des mindestens einen Haushaltgeräts durchzuführen. Bei dem Haushaltgerät kann es sich beispielsweise um ein Küchengerät handeln, wie zum Beispiel ein Kochfeld, einen Backofen oder dergleichen. Unter einem Haushaltgerät kann ein Haushaltsgerät oder Hausgerät verstanden werden. Das mindestens eine Haushaltgerät kann ausgebildet sein, um zumindest eine Funktion bereitzustellen, deren Ausführung die Präsenz des Nutzers erfordern kann, insbesondere innerhalb einer vordefinierten Umgebung, wie beispielsweise innerhalb eines Raums in einem Gebäude. Das ausgewählte Haushaltgerät und das betätigte Haushaltgerät können innerhalb einer vordefinierten Umgebung angeordnet sein, wie beispielsweise innerhalb eines Raums in einem Gebäude. Die Nutzerschnittstelle kann als eine Taste, ein Bedienknopf, ein Schalter, eine berührungsempfindliche Anzeige oder dergleichen ausgeführt sein. Die Sprachassistenzvorrichtung kann als ein haushaltgeräteexternes Gerät ausgeführt sein. Dabei kann die Sprachassistenzvorrichtung in Hörweite zu dem betätigten Haushaltgerät angeordnet sein. Das betätigte Haushaltgerät und die Sprachassistenzvorrichtung können signalübertragungsfähig miteinander verbunden sein. Ein Funkmodul kann ausgebildet sein, um mit Haushaltgeräten zu kommunizieren. Ein Funkmodul kann Einrichtungen zum Senden und zum Empfangen von Signalen aufweisen.

Gemäß einer Ausführungsform kann die vordefinierte Positionsbeziehung eine Sichtverbindung und zusätzlich oder alternativ mindestens einen Schwellenwert für einen Abstand zwischen dem betätigten Haushaltgerät und dem ausgewählten Haushaltgerät definieren. Auf diese Weise kann eine sichere Bedienung des ausgewählten Haushaltgeräts per Sprache auch für einen beaufsichtigten Betrieb erreicht werden.

Auch kann das Verfahren einen Schritt des Generierens eines Lageplans von Haushaltgeräten relativ zueinander unter Verwendung der Lokalisierungsdaten aufweisen. Hierbei kann im Schritt des Bestimmens der Lageplan verwendet werden. So kann auf einfache und genaue Weise festgestellt werden, ob zwischen dem betätigten Haushaltgerät und dem ausgewählten Haushaltgerät die vordefinierte Positionsbeziehung besteht.

Ferner kann das Verfahren einen Schritt des Ermittelns der Lokalisierungsdaten aus Abständen und zusätzlich oder alternativ Winkeln zwischen Haushaltgeräten unter Verwendung einer Laufzeitmessung von Funksignalen aufweisen, die zwischen den Haushaltgeräten übertragen werden. Somit kann eine Lage von Haushaltgeräten relativ zueinander zuverlässig ermittelt werden, ohne beispielsweise auf optische Sensoren zurückzugreifen, die beispielsweise vom Nutzer unerwünscht sein können.

Hierbei können die Funksignale in Pulsen im Nanosekundenbereich übertragen werden. Auf diese Weise können die Lokalisierungsdaten einfach und exakt ermittelt werden.

Dabei können die Funksignale eine Bandbreite von mindestens 500 Megahertz aufweisen und zusätzlich oder alternativ in einem Bereich von 3,1 bis 10,6 Gigahertz liegen. Dadurch kann eine besonders genaue und zuverlässige Erfassung von Reichweite und/oder Richtung der Signale ermöglicht werden.

Zudem können mittels der Funksignale Nutzdaten übertragen werden, insbesondere Identifikationsinformationen der Haushaltgeräte. Somit kann die Lokalisierung durch eine zusätzliche Funktion der Übertragung von Nutzdaten ergänzt werden.

Auch kann das Verfahren einen Schritt des Empfangens des Präsenzsignals von der durch den Nutzer physisch betätigten Nutzerschnittstelle des betätigten Haushaltgeräts aufweisen. Dadurch kann die Präsenz des Nutzers an dem betätigten Haushaltgerät zuverlässig festgestellt werden.

Gemäß einer Ausführungsform kann im Schritt des Bestimmens bestimmt werden, ob das ausgewählte Haushaltgerät dem betätigten Haushaltgerät entspricht. Hierbei kann im Schritt des Bewirkens ein Betrieb des ausgewählten Haushaltgeräts unter Verwendung des Sprachbefehlssignals bewirkt werden, wenn im Schritt des Bestimmens bestimmt wird, dass das ausgewählte Haushaltgerät dem betätigten Haushaltgerät entspricht. Auf diese Weise kann auf einfache Weise das betätigte Haushaltgerät als ausgewähltes Haushaltgerät betrieben werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein Haushaltgerät umfasst folgende Merkmale:
eine Ausführungsform einer hierin genannten Vorrichtung oder eine Signalschnittstelle zu einer Ausführungsform einer hierin genannten Vorrichtung;
die Nutzerschnittstelle zum Bereitstellen des Präsenzsignals ansprechend auf physisches Betätigen durch den Nutzer; und
das Funkmodul zum Bereitstellen der Lokalisierungsdaten.

In Verbindung mit dem Haushaltgerät kann eine Ausführungsform einer hierin genannten Vorrichtung vorteilhaft eingesetzt oder verwendet werden, um einen beaufsichtigten Betrieb des Haushaltgeräts und zusätzlich oder alternativ eines weiteren Haushaltgeräts durchzuführen.

Gemäß einer Ausführungsform kann das Funkmodul ein Ultrabreitbandfunkmodul sein, insbesondere nach dem Standard IEEE 802.15.4z. Zusätzlich oder alternativ kann das Funkmodul mehrere Empfangsantennen aufweisen. Somit kann eine präzise Bestimmung von Reichweite und optional zusätzlich Richtung von Funksignalen und daher Abständen und optional zusätzlich Winkeln zwischen Haushaltgeräten ermöglicht werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Verbunds von Haushaltgeräten gemäß einem Ausführungsbeispiel;
- Figur 2: eine schematische Darstellung des Verbunds von Haushaltgeräten aus Figur 1;
- Figur 3: eine schematische Darstellung eines Haushaltgeräts gemäß einem Ausführungsbeispiel; und
- Figur 4: ein Ablaufdiagramm eines Ausführungsbeispiels eines Verfahrens zum Betreiben mindestens eines Haushaltgeräts.

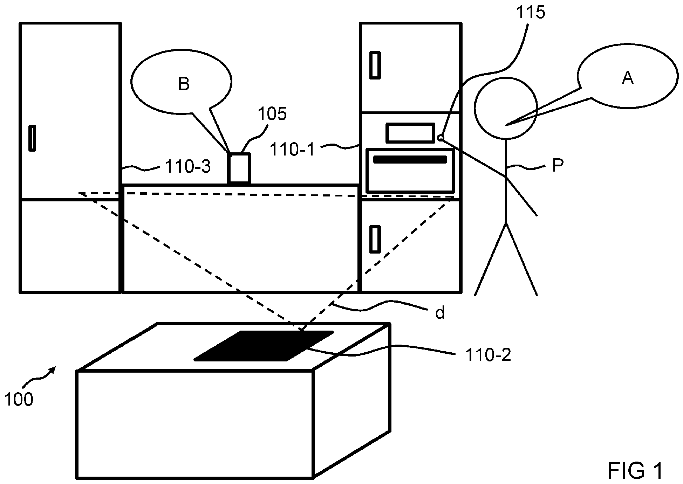

Figur 1 zeigt eine schematische Darstellung eines Verbunds 100 von Haushaltgeräten 110-1, 110-2, 110-3 gemäß einem Ausführungsbeispiel. Der Verbund 100 von Haushaltgeräten 110-1, 110-2, 110-3 ist innerhalb einer vordefinierten Umgebung, beispielsweise innerhalb eines Raums in einem Gebäude angeordnet, insbesondere in einer Küche. In der Darstellung von Figur 1, die beispielsweise als eine schematische Schrägansicht ausgeführt ist, gehören zu dem Verbund 100 lediglich beispielhaft drei Haushaltgeräte 110-1, 110-2, 110-3, hier insbesondere ein Backofen 110-1, ein Kochfeld 110-2 und ein Kühlschrank 110-3. Ferner ist in der vordefinierten Umgebung eine Sprachassistenzvorrichtung 105 in Hörreichweite von den Haushaltgeräten 110-1, 110-2, 110-3 angeordnet. Zwischen den Haushaltgeräten 110-1, 110-2, 110-3 und der Sprachassistenzvorrichtung 105 ist eine signalübertragungsfähige Verbindung eingerichtet. Ferner sind die Haushaltgeräte 110-1, 110-2, 110-3 durch Abstände d voneinander beanstandet angeordnet, wobei eine Positionsbeziehung zwischen den Haushaltgeräten 110-1, 110-2, 110-3 besteht.

Es besteht gemäß dem hier dargestellten Ausführungsbeispiel die Möglichkeit, dass ein Nutzer P bzw. eine Person P von einem Haushaltgerät aus, hier dem Backofen 110-1, alle in Sichtweite befindlichen Haushaltgeräte, hier das Kochfeld 110-2 und/oder den Kühlschrank 110-3, per Sprache bzw. Sprachbefehl A bedienen kann, auch solche Funktionen, die einen beaufsichtigten Betrieb vorsehen, sofern er an dem ersten Haushaltgerät, hier dem Backofen als betätigtes Haushaltgerät 110-1, durch Aktivieren der Sprachassistenzvorrichtung 105 bzw. eines Sprachassistenten seine Präsenz im Raum bestätigt hat. Ermöglicht wird diese Art der Bedienung des Verbunds 100 der Haushaltgeräte 110-1, 110-2, 110-3 insbesondere dadurch, dass Positionsbeziehung, beispielsweise die Abstände d, zwischen den Haushaltgeräten 110-1, 110-2, 110-3 bekannt ist. Dazu erfolgt seitens des Nutzers P ein physisches Betätigen einer Nutzerschnittstelle 115 des betätigten Haushaltgeräts 110-1.

Dabei kann zumindest eines oder jedes der Haushaltgeräte 110-1, 110-2, 110-3 eine Nutzerschnittstelle 115 aufweisen. Nach dem Betätigen einer Nutzerschnittstelle 115 und dem Sprechen des Sprachbefehls A kann die Sprachassistenzvorrichtung 105 ein akustisches Bestätigungssignal B ausgeben, das eine Bestätigungsmeldung des Sprachbefehls A repräsentiert, hier beispielsweise eine gewünschte Bedienung, insbesondere ein Einschalten, des Kochfeldes als ausgewähltes Haushaltgerät 110-2.

Nicht alle Haushaltgeräte dürfen vollumfänglich bzw. ohne weitere Einschränkungen per Sprache bedient werden. Einige Haushaltgeräte besitzen sicherheitsrelevante Funktionen, die normativ nur beaufsichtigt bedient werden dürfen, beispielsweise ein Kochfeld. Ein beaufsichtigter Betrieb soll sichergestellt werden. Wenn einzig und allein auf externe Sprachassistenten wie die Sprachassistenzvorrichtung 105 gesetzt würde, könnte ein beaufsichtigter Betrieb per Sprache nicht sichergestellt werden. Dies wird durch die Nutzerschnittstelle 115, beispielsweise in Gestalt einer Taste, am Haushaltgerät 110-1, 110-2, 110-3 zur Aktivierung des Sprachassistenten gelöst. Somit lassen sich von diesem Haushaltgerät aus, hier dem Backofen als betätigtes Haushaltgerät 110-1, auch andere Haushaltgeräte, hier das Kochfeld als ausgewähltes Haushaltgerät 110-2, in Sichtweite per Sprache bedienen, wenn sie ihre Position bzw. Positionsbeziehung zueinander kennen. Um Haushaltgeräte per Sprache bedienen zu können, wird auf ein externes Gerät wie einen Smart Speaker, ein Tablet, oder ein Smartphone als Sprachassistenzvorrichtung 105 zurückgegriffen. Die Sprachassistenzvorrichtung 105 nimmt den Sprachbefehl A auf und sendet ihn beispielsweise über eine Datenwolke bzw. Cloud des Sprachassistentenanbieters, an eine Cloud des Haushaltgeräteherstellers und übersetzt den Befehl in eine Gerätefunktion, der dann an das jeweilige Haushaltgerät 110-1, 110-2, 110-3 gesendet wird.

Mittels der Nutzerschnittstelle 115 kann ein externer Sprachassistent wie die Sprachassistenzvorrichtung 105 aktiviert werden. Dabei ist beispielsweise durch das Drücken einer Taste die Präsenz des Nutzers P vor dem betätigten Haushaltgerät 110-1, hier dem Backofen, sichergestellt und ein kurzer Sprachbefehl A, insbesondere ohne Wake-Word, und Aufrufen eines Skills ist möglich. Andernfalls bräuchte jedes einzelne Haushaltgerät eine andere Sensorik, welche die Präsenz des Nutzers P eindeutig erkennt, der auch die Sprachbedienung vornimmt. Diese Funktion kann Nutzerschnittstelle 115 bzw. Aktivierungstaste des Sprachassistenten an jedem Haushaltgerät 110-1, 110-2, 110-3 übernehmen, die dann die Präsenz des Nutzers P sicherstellt.

Herkömmlicherweise wäre also eine Sensorik erforderlich, die den Nutzer P, welcher den Sprachbefehl A abgibt, erkennt und ferner erkennt, dass derselbe sich in der Nähe des zu bedienenden Haushaltgerätes befindet. Nicht alle herkömmlichen Haushaltgeräte verfügen über solch eine Sensorik, oder Kunden möchten keine solche Sensorik, z. B. wenn es sich um eine Kamera handelt. Eine solche Sensorik verfügt beispielsweise häufig lediglich über einen eingeschränkten Detektionsbereich, in den der Nutzer P erst eintreten müsste. Im Gegensatz dazu wird gemäß dem hier dargestellten Ausführungsbeispiel eine Nutzerschnittstelle 115, beispielsweise eine Taste, an jedem Haushaltgerät 110-1, 110-2, 110-3 zur Aktivierung des Sprachassistenten genutzt, wobei man sich unmittelbar in Bedienreichweite dieser Taste befinden muss, um sie drücken zu können, um den Sprachassistenten an allen infrage kommenden Haushaltgeräten 110-1, 110-2, 110-3 ohne Einschränkungen nutzen zu dürfen. Der Nutzer P kann somit den Vorteil einer uneingeschränkten Sprachbedienung haben, wenn er in Sichtweite des ausgewählten Haushaltgerätes 110-2 ist, ohne sich auf Bedienreichweite annähern zu brauchen.

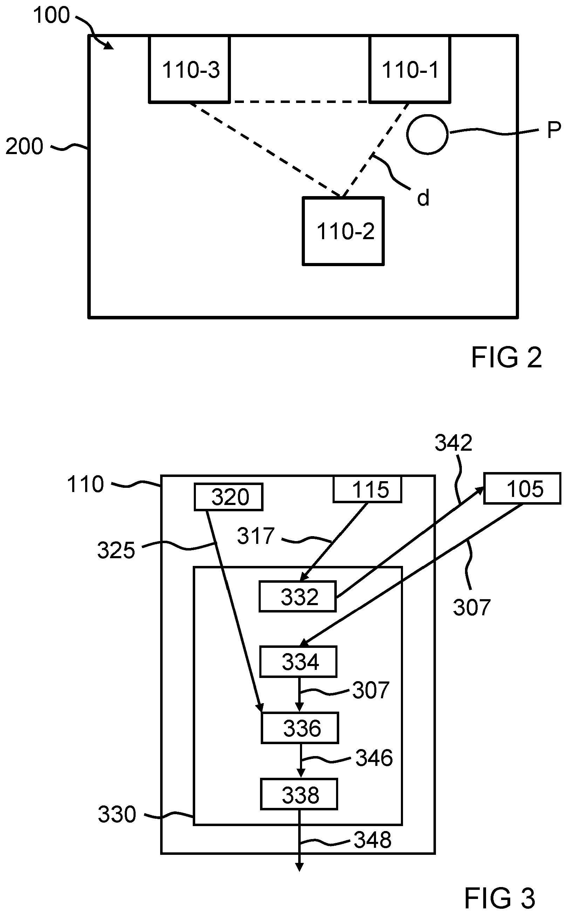

Figur 2 zeigt eine schematische Darstellung des Verbunds 100 von Haushaltgeräten 110-1, 110-2, 110-3 aus Figur 1. Hierbei zeigt Figur 2 den Verbund 100 der Haushaltgeräte 110-1, 110-2, 110-3, die Abstände d zwischen denselben und den Nutzer P innerhalb einer vordefinierten Umgebung 200, hier beispielsweise der Küche, in einer schematischen Draufsicht.

Figur 3 zeigt eine schematische Darstellung eines Haushaltgeräts 110 gemäß einem Ausführungsbeispiel. Das Haushaltgerät 110 entspricht oder ähnelt hierbei einem der Haushaltgeräte aus einer der vorstehend beschriebenen Figuren. Beispielsweise handelt es sich bei dem Haushaltgerät 110 und den Backofen als betätigtes Haushaltgerät aus den Figuren 1 und/oder 2.

Das Haushaltgerät 110 umfasst die Nutzerschnittstelle 115, ein Funkmodul 320 und eine Vorrichtung zum Betreiben bzw. Betriebsvorrichtung 330. Dabei sind die Nutzerschnittstelle 115 und das Funkmodul 320 signalübertragungsfähig mit der Betriebsvorrichtung 330 verbunden. Gemäß einem anderen Ausführungsbeispiel kann das Haushaltgerät 110 anstelle der Betriebsvorrichtung 330 eine Signalschnittstelle zu einer solchen Betriebsvorrichtung 330 aufweisen, wobei zumindest eine der Einrichtungen der Betriebsvorrichtung 330 außerhalb des Haushaltgeräts 110 angeordnet sein kann.

Die Nutzerschnittstelle 115 ist auf physische Weise durch den Nutzer betätigbar. Die Nutzerschnittstelle 115 ist ausgebildet, um ansprechend auf ein physisches Betätigen durch den Nutzer ein Präsenzsignal 317 bereitzustellen. Das Präsenzsignal 317 repräsentiert bzw. bestätigt eine Präsenz des Nutzers benachbart zu dem Haushaltgerät 110 als betätigtem Haushaltgerät.

Das Funkmodul 320 ist ausgebildet, um Lokalisierungsdaten 325 bereitzustellen. Das Funkmodul 320 ist beispielsweise als ein Ultrabreitbandfunkmodul ausgeführt, insbesondere nach dem Standard IEEE 802.15.4z. Gemäß einem Ausführungsbeispiel umfasst das Funkmodul 320 mehrere Empfangsantennen. Das Funkmodul 320 ist ausgebildet, um Funksignale zu übertragen bzw. zu senden und zu empfangen bzw. mit einem Funkmodul mindestens eines weiteren Haushaltgeräts auszutauschen. Die Funksignale werden beispielsweise in Pulsen im Nanosekundenbereich übertragen. Insbesondere weisen die Funksignale eine Bandbreite von mindestens 500 Megahertz auf und/oder liegen in einem Bereich von 3,1 bis 10,6 Gigahertz. Mittels der Funksignale sind gemäß einem Ausführungsbeispiel auch Nutzdaten übertragbar, insbesondere Identifikationsinformationen der Haushaltgeräte.

Die Vorrichtung zum Betreiben bzw. Betriebsvorrichtung 330 ist ausgebildet, um mindestens ein Haushaltgerät zu betreiben, beispielsweise das Haushaltgerät 110 und/oder mindestens ein weiteres Haushaltgerät, das innerhalb einer Reichweite des Funkmoduls 320 angeordnet ist. Die Betriebsvorrichtung 330 umfasst eine Ausgabeeinrichtung 332, eine Einleseeinrichtung 334, eine Bestimmungseinrichtung 336 und eine Bewirkungseinrichtung 338.

Insbesondere ist die Betriebsvorrichtung 330 ausgebildet, um das Präsenzsignal 317 von der durch den Nutzer physisch betätigten Nutzerschnittstelle 115 des betätigten Haushaltgeräts, hier des Haushaltgeräts 110, zu empfangen.

Die Ausgabeeinrichtung 332 ist ausgebildet, um ansprechend auf das Präsenzsignal 317 von der Nutzerschnittstelle 115 ein Aktivierungssignal 342 zum Aktivieren der Sprachassistenzvorrichtung 105 auszugeben. Die Sprachassistenzvorrichtung 105 ist unter Verwendung des Aktivierungssignals 342 aktivierbar.

Die Einleseeinrichtung 334 ist ausgebildet, um von der aktivierten Sprachassistenzvorrichtung 105 ein Sprachbefehlssignal 307 einzulesen, das einen Sprachbefehl des Nutzers zum Betreiben eines ausgewählten Haushaltgeräts repräsentiert. Auch ist die Einleseeinrichtung 334 ausgebildet, um das Sprachbefehlssignal 307 an die Bestimmungseinrichtung 336 weiterzugeben.

Die Bestimmungseinrichtung 336 ist ausgebildet, um unter Verwendung der Lokalisierungsdaten 325 von dem Funkmodul 320 zu bestimmen, ob das ausgewählte Haushaltgerät in einer vordefinierten Positionsbeziehung relativ zu dem betätigten Haushaltgerät, hier dem Haushaltgerät 110, angeordnet ist. Anders ausgedrückt ist die Bestimmungseinrichtung 336 ausgebildet, um das Sprachbefehlssignal 307 unter Verwendung der Lokalisierungsdaten 325 dahingehend zu überprüfen, ob das ausgewählte Haushaltgerät angesichts dessen Positionsbeziehung relativ zu dem betätigten Haushaltgerät, hier dem Haushaltgerät 110, mittels des Sprachbefehls bedient werden darf. Auch ist die Bestimmungseinrichtung 336 ausgebildet, um der Bewirkungseinrichtung 338 ein Ergebnissignal 346 bereitzustellen, das ein Ergebnis der durch die Bestimmungseinrichtung 336 durchgeführten Bestimmung repräsentiert und optional zusätzlich das Sprachbefehlssignal 307 bzw. den Sprachbefehl umfasst.

Dabei definiert die vordefinierte Positionsbeziehung beispielsweise eine Sichtverbindung und zusätzlich oder alternativ mindestens einen Schwellenwert für einen Abstand zwischen dem betätigten Haushaltgerät, hier dem Haushaltgerät 110, und dem ausgewählten Haushaltgerät, hier einem weiteren Haushaltgerät. Gemäß einem Ausführungsbeispiel ist die Betriebsvorrichtung 330 oder die Bestimmungseinrichtung 336 ausgebildet, um unter Verwendung der Lokalisierungsdaten 325 einen Lageplan von Haushaltgeräten relativ zueinander zu generieren. Die Bestimmungseinrichtung 336 ist hierbei ausgebildet, um den generierten Lageplan zu verwenden. Gemäß einem Ausführungsbeispiel ist die Betriebsvorrichtung 330 oder die Bestimmungseinrichtung 336 ausgebildet, um unter Verwendung einer Laufzeitmessung von Funksignalen, die zwischen dem Haushaltgerät 110 und mindestens einem weiteren Haushaltgerät übertragen werden, aus durch rohe Lokalisierungsdaten 325 repräsentierten Abständen und/oder Winkeln zwischen den Haushaltgeräten, verarbeitete Lokalisierungsdaten zu ermitteln. Die Bestimmungseinrichtung 336 ist hierbei ausgebildet, um die verarbeiteten Lokalisierungsdaten zu verwenden.

Die Bewirkungseinrichtung 338 ist ausgebildet, um einen Betrieb des ausgewählten Haushaltgeräts unter Verwendung des Sprachbefehlssignals 307 zu bewirken, wenn das Ergebnissignal 346 anzeigt, dass das ausgewählte Haushaltgerät in der vordefinierten Positionsbeziehung relativ zu dem betätigten Haushaltgerät, hier dem Haushaltgerät 110, angeordnet ist. Dabei ist die Bewirkungseinrichtung 338 ausgebildet, um ein Betriebssignal 348 zum Betreiben des ausgewählten Haushaltgeräts unter Verwendung des Sprachbefehlssignals 307 bereitzustellen.

Gemäß einem Ausführungsbeispiel ist die Bestimmungseinrichtung 336 ausgebildet, um zu bestimmen, ob das ausgewählte Haushaltgerät dem betätigten Haushaltgerät, hier dem Haushaltgerät 110, entspricht. Hierbei ist die Bewirkungseinrichtung 338 ausgebildet, um einen Betrieb des ausgewählten Haushaltgeräts unter Verwendung des Sprachbefehlssignals 307 zu bewirken, wenn durch die Bestimmungseinrichtung 336 bestimmt wurde, dass das ausgewählte Haushaltgerät dem betätigten Haushaltgerät, hier dem Haushaltgerät 110, entspricht.

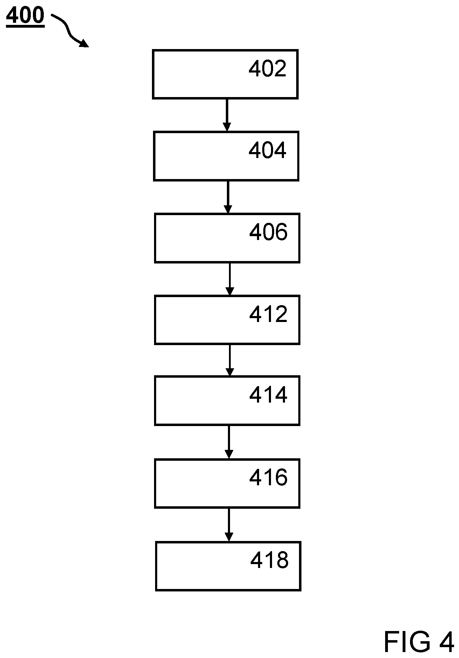

Figur 4 zeigt ein Ablaufdiagramm eines Ausführungsbeispiels eines Verfahrens 400 zum Betreiben mindestens eines Haushaltgeräts. Das Verfahren 400 zum Betreiben ist unter Verwendung der Vorrichtung aus Figur 3 oder einer ähnlichen Vorrichtung ausführbar. Hierbei ist das Verfahren 400 zum Betreiben ausführbar, um mindestens ein Haushaltgerät aus einer der vorstehend beschriebenen Figuren oder ein ähnliches Haushaltgerät zu betreiben.

Das Verfahren 400 zum Betreiben umfasst einen Schritt 412 des Ausgebens, in dem ansprechend auf ein Präsenzsignal von einer durch einen Nutzer physisch betätigten Nutzerschnittstelle eines betätigten Haushaltgeräts ein Aktivierungssignal zum Aktivieren einer Sprachassistenzvorrichtung ausgegeben wird. Das Präsenzsignal repräsentiert eine Präsenz des Nutzers benachbart zu dem betätigten Haushaltgerät. Das Verfahren 400 zum Betreiben umfasst ferner einen Schritt 414 des Einlesens eines Sprachbefehlssignals von der aktivierten Sprachassistenzvorrichtung. Hierbei repräsentiert das Sprachbefehlssignal einen Sprachbefehl des Nutzers zum Betreiben eines ausgewählten Haushaltgeräts.

Umfasst das Verfahren 400 zum Betreiben einen Schritt 416 des Bestimmens, ob das ausgewählte Haushaltgerät in einer vordefinierten Positionsbeziehung relativ zu dem betätigten Haushaltgerät angeordnet ist, unter Verwendung von Lokalisierungsdaten von einem Funkmodul des betätigten Haushaltgeräts und/oder des ausgewählten Haushaltgeräts. Das Verfahren 400 zum Betreiben umfasst zudem einen Schritt 418 des Bewirkens, in dem ein Betrieb des ausgewählten Haushaltgeräts unter Verwendung des Sprachbefehlssignals bewirkt wird, wenn im Schritt 416 des Bestimmens bestimmt wird, dass das ausgewählte Haushaltgerät in der vordefinierten Positionsbeziehung relativ zu dem betätigten Haushaltgerät angeordnet ist.

Gemäß einem Ausführungsbeispiel umfasst das Verfahren 400 zum Betreiben auch einen Schritt 406 des Empfangens, in dem das Präsenzsignal von der durch den Nutzer physisch betätigten Nutzerschnittstelle des betätigten Haushaltgeräts empfangen wird. Dabei erfolgt der Schritt 406 des Empfangens vor dem Schritt 412 des Ausgebens.

Gemäß einem Ausführungsbeispiel umfasst das Verfahren 400 zum Betreiben ferner einen Schritt 402 des Ermittelns und/oder einen Schritt 404 des Generierens. Der Schritt 402 des Ermittelns und/oder der Schritt 404 des Generierens sind vor dem Schritt 412 des Ausgebens und/oder kontinuierlich und/oder zyklisch wiederholt ausführbar. In dem Schritt 402 des Ermittelns werden die Lokalisierungsdaten aus Abständen und/oder Winkeln zwischen Haushaltgeräten unter Verwendung einer Laufzeitmessung von Funksignalen ermittelt, die zwischen den Haushaltgeräten übertragen werden. In dem Schritt 404 des Generierens wird unter Verwendung der Lokalisierungsdaten ein Lageplan von Haushaltgeräten relativ zueinander generiert. Hierbei kann im Schritt 414 des Bestimmens der Lageplan verwendet werden.

Unter Bezugnahme auf die vorstehend beschriebenen Figuren werden nachfolgend Ausführungsbeispiele sowie Vorteile von Ausführungsbeispielen nochmals zusammenfassend und mit anderen Worten kurz erläutert.

Gemäß Ausführungsbeispielen kann somit eine Lokalisierung von Haushaltgeräten 110, 110-1, 110-2, 110-3 zur sicheren Sprachbedienung nach Präsenzerkennung realisiert werden. Erreicht wird dies insbesondere dadurch, dass die Haushaltgeräte 110, 110-1, 110-2, 110-3 ihre Position zueinander kennen. Die Haushaltgeräte 110, 110-1, 110-2, 110-3 sind mit Funkmodulen 320, insbesondere Ultrabreitbandfunkmodulen (Ultra wideband = UWB) ausgestattet, die nach dem Standard IEEE 802.15.4z die Reichweite, beispielsweise auf unter 10 cm genau, und Richtung, beispielsweise auf 3° genau, zueinander bestimmen können. Dazu wird ein breitbandiges, z. B. min. 500 MHz, Funksignal genutzt, zum Beispiel in einem Bereich zwischen 3,1 und 10,6 GHz, um damit zeitlich kurze Pulse, im Nanosekundenbereich, zu senden. Damit lassen sich Daten austauschen, wie z. B. die ID eines Haushaltgerätes 110, 110-1, 110-2, 110-3 und Abstände d über ein Laufzeitmessverfahren bestimmen (Time Difference of Arrival). Manche UWB-Module bzw. Funkmodul 320 umfassen mehrere Empfangsantennen, sodass über den Laufzeitunterschied die Richtung des gesendeten Signals bestimmt werden kann (Angle of Arrival). Die Haushaltgeräte 110, 110-1, 110-2, 110-3 in einem Raum können so miteinander kommunizieren und einen Lageplan aufstellen, wie und wo sie zu einander stehen. Somit lässt sich eine Raumkarte bilden, woraus man schließen kann, welche Sichtverbindungen zwischen den Haushaltgeräten 110, 110-1, 110-2, 110-3 bestehen. Da es innerhalb eines solchen Verbundes 100 bzw. Geräteverbundes mindestens ein Haushaltgerät 110, 110-1 mit einer Nutzerschnittstelle 115, beispielsweise einer Taste, zur Aktivierung eines Sprachassistenten gibt, kann der Nutzer P durch Drücken dieser Taste seine Präsenz vor diesem Haushaltgerät 110, 110-1 bestätigen und einen Sprachbefehl A, direkt an dieses Haushaltgerät 110, 110-1 gerichtet, abgeben. Innerhalb der durch die UWB-Funkverbindung sichergestellten Sichtverbindung mehrerer Haushaltgeräte 110, 110-1, 110-2, 110-3 kann der Nutzer P durch Aktivierung des Sprachassistenten an einem Haushaltgerät 110, 110-1 auch alle anderen Haushaltgeräte 110-2, 110-3 per Sprache bedienen. Diese Bedienung gilt als beaufsichtigter Betrieb, da der Nutzer P in Sichtweite all dieser Haushaltgeräte 110, 110-1, 110-2, 110-3 ist. Er könnte also durch Drücken der Taste am Backofen 110-1 das Kochfeld 110-2 per Sprache ein- und ausschalten.

Der Vorteil besteht unter anderem darin, dass der Nutzer P kein zusätzliches, externes Gerät benötigt. So kann beispielsweise Platz für andere kleine Haushaltgeräte eingespart bzw. geschaffen werden. Der Nutzer P benötigt auch keine Sensorik in jedem Haushaltgerät 110, 110-1, 110-2, 110-3, die ihn als Bediener per Sprache erkennt und die Präsenz im Sichtbereich sicherstellt. Der Nutzer P kann von dem Haushaltgerät 110, 110-1, 110-2, 110-3 aus, an dem er sich gerade befindet, oder am nächsten steht, den Sprachassistenten durch Drücken einer Taste aktivieren und alle anderen in Sichtweite befindlichen Haushaltgeräte 110, 110-1, 110-2, 110-3 sicher per Sprache bedienen, auch sicherheitsrelevante Funktion wie das Ein- und Ausschalten eines Kochfeldes. Dabei kann auf eine Funkverbindung zurückgegriffen werden, die anstelle von Bluetooth und Wifi normativ zur Abstandsmessung der Haushaltgeräte 110, 110-1, 110-2, 110-3 untereinander erlaubt ist. Auch bietet so ein Funkmodul 320 weiteren Nutzen und Vorteile, da man das Funkmodul 320 zur Benutzererkennung nutzen könnte, sodass man keine zusätzliche Sensorik zur Erkennung des Nutzers P benötigt. Für die Funktion ist es unerheblich, wo genau der Sprachassistent bzw. der Smart Speaker bzw. die Sprachassistenzvorrichtung 105 angeordnet ist, solange dies in Hörreichweite ist. Abgesichert durch Ausführungsbeispiele ist dabei, dass die Person bzw. der Nutzer P in Sichtweite der relevanten Haushaltgeräte 110, 110-1, 110-2, 110-3 ist. Dazu zählen das Haushaltgerät 110, 110-1, über das der Sprachassistent aktiviert wird und damit die Präsenz bestätigt wird, und das Haushaltgerät 110-2, das bedient werden soll.

## Patentansprüche

1. Verfahren (400) zum Betreiben mindestens eines Haushaltgeräts (110, 110-1, 110-2, 110-3), wobei das Verfahren (400) folgende Schritte aufweist:
Ausgeben (412) eines Aktivierungssignals (342) zum Aktivieren einer Sprachassistenzvorrichtung (105) ansprechend auf ein Präsenzsignal (317) von einer durch einen Nutzer (P) physisch betätigten Nutzerschnittstelle (115) eines betätigten Haushaltgeräts (110, 110-1), wobei das Präsenzsignal (317) eine Präsenz des Nutzers (P) benachbart zu dem betätigten Haushaltgerät (110, 110-1) repräsentiert;
Einlesen (414) eines Sprachbefehlssignals (307) von der aktivierten Sprachassistenzvorrichtung (105), wobei das Sprachbefehlssignal (307) einen Sprachbefehl des Nutzers (P) zum Betreiben eines ausgewählten Haushaltgeräts (110-2) repräsentiert;
Bestimmen (416), ob das ausgewählte Haushaltgerät (110-2) in einer vordefinierten Positionsbeziehung relativ zu dem betätigten Haushaltgerät (110, 110-1) angeordnet ist, unter Verwendung von Lokalisierungsdaten (325) von einem Funkmodul (320) des betätigten Haushaltgeräts (110, 110-1) und/oder des ausgewählten Haushaltgeräts (110-2); und
Bewirken (418) eines Betriebs des ausgewählten Haushaltgeräts (110-2) unter Verwendung des Sprachbefehlssignals (307), wenn im Schritt (416) des Bestimmens bestimmt wird, dass das ausgewählte Haushaltgerät (110-2) in der vordefinierten Positionsbeziehung relativ zu dem betätigten Haushaltgerät (110, 110-1) angeordnet ist.

2. Verfahren (400) gemäß Anspruch 1, wobei die vordefinierte Positionsbeziehung eine Sichtverbindung und/oder mindestens einen Schwellenwert für einen Abstand (d) zwischen dem betätigten Haushaltgerät (110, 110-1) und dem ausgewählten Haushaltgerät (110-2) definiert.

3. Verfahren (400) gemäß einem der vorangegangenen Ansprüche, mit einem Schritt (404) des Generierens eines Lageplans von Haushaltgeräten (110, 110-1, 110-2, 110-3) relativ zueinander unter Verwendung der Lokalisierungsdaten (325), wobei im Schritt (416) des Bestimmens der Lageplan verwendet wird.

4. Verfahren (400) gemäß einem der vorangegangenen Ansprüche, mit einem Schritt (402) des Ermittelns der Lokalisierungsdaten (325) aus Abständen (d) und/oder Winkeln zwischen Haushaltgeräten (110, 110-1, 110-2, 110-3) unter Verwendung einer Laufzeitmessung von Funksignalen, die zwischen den Haushaltgeräten (110, 110-1, 110-2, 110-3) übertragen werden.

5. Verfahren (400) gemäß Anspruch 4, wobei die Funksignale in Pulsen im Nanosekundenbereich übertragen werden.

6. Verfahren (400) gemäß einem der Ansprüche 4 bis 5, wobei die Funksignale eine Bandbreite von mindestens 500 Megahertz aufweisen und/oder in einem Bereich von 3,1 bis 10,6 Gigahertz liegen.

7. Verfahren (400) gemäß einem der Ansprüche 4 bis 6, wobei mittels der Funksignale Nutzdaten übertragen werden, insbesondere Identifikationsinformationen der Haushaltgeräte (110, 110-1, 110-2, 110-3).

8. Verfahren (400) gemäß einem der vorangegangenen Ansprüche, mit einem Schritt des Empfangens (406) des Präsenzsignals (317) von der durch den Nutzer (P) physisch betätigten Nutzerschnittstelle (115) des betätigten Haushaltgeräts (110, 110-1).

9. Verfahren (400) gemäß einem der vorangegangenen Ansprüche, wobei im Schritt (416) des Bestimmens bestimmt wird, ob das ausgewählte Haushaltgerät (110-2) dem betätigten Haushaltgerät (110, 110-1) entspricht, wobei im Schritt (418) des Bewirkens ein Betrieb des ausgewählten Haushaltgeräts (110-2) unter Verwendung des Sprachbefehlssignals (307) bewirkt wird, wenn im Schritt (416) des Bestimmens bestimmt wird, dass das ausgewählte Haushaltgerät (110-2) dem betätigten Haushaltgerät (110, 110-1) entspricht.

10. Vorrichtung (330), die ausgebildet ist, um die Schritte des Verfahrens (400) gemäß einem der vorangegangenen Ansprüche in entsprechenden Einheiten (332, 334, 336, 338) auszuführen.

11. Haushaltgerät (110, 110-1, 110-2, 110-3), das folgende Merkmale aufweist:
eine Vorrichtung (330) gemäß Anspruch 10;
die Nutzerschnittstelle (115) zum Bereitstellen des Präsenzsignals (317) ansprechend auf physisches Betätigen durch den Nutzer (P); und
das Funkmodul (320) zum Bereitstellen der Lokalisierungsdaten (325).

12. Haushaltgerät (110, 110-1, 110-2, 110-3) gemäß Anspruch 11, wobei das Funkmodul (320) ein Ultrabreitbandfunkmodul ist, insbesondere nach dem Standard IEEE 802.15.4z, und/oder mehrere Empfangsantennen aufweist.

13. Computer-Programmprodukt mit Programmcode zur Durchführung des Verfahrens (400) nach einem der Ansprüche 1 bis 9, wenn das Computer-Programmprodukt auf einer Vorrichtung (330) ausgeführt wird.

14. Maschinenlesbares Speichermedium, auf dem das Computerprogramm nach Anspruch 13 gespeichert ist.

## Claims

1. Method (400) for operating at least one domestic appliance (110, 110-1, 110-2, 110-3), wherein the method (400) comprises the following steps:
outputting (412) an activation signal (342) in order to activate a voice assistance device (105) in response to a presence signal (317) from a user interface (115), which is physically activated by a user (P), of an activated domestic appliance (110, 110-1), wherein the presence signal (317) represents a presence of the user (P) adjacent to the activated domestic appliance (110, 110-1);
reading (414) a voice command signal (307) from the activated voice assistance device (105), wherein the voice command signal (307) represents a voice command of the user (P) for operating a selected domestic appliance (110-2);
determining (416) whether the selected domestic appliance (110-2) is arranged in a predefined positional relationship relative to the activated domestic appliance (110, 110-1) using location data (325) from a radio module (320) of the activated domestic appliance (110, 110-1) and/or the selected domestic appliance (110-2); and
effecting (418) an operation of the selected domestic appliance (110-2) using the voice command signal (307) if it is determined in the determining step (416) that the selected domestic appliance (110-2) is arranged in the predefined positional relationship relative to the activated domestic appliance (110, 110-1).

2. Method (400) according to claim 1, wherein the predefined positional relationship defines a line of sight and/or at least one threshold value for a distance (d) between the activated domestic appliance (110, 110-1) and the selected domestic appliance (110-2).

3. Method (400) according to either of the preceding claims, comprising a step (404) of generating a layout plan of domestic appliances (110, 110-1, 110-2, 110-3) relative to one another using the location data (325), wherein the layout plan is used in the determining step (416).

4. Method (400) according to any of the preceding claims, comprising a step (402) of ascertaining the localisation data (325) from distances (d) and/or angles between domestic appliances (110, 110-1, 110-2, 110-3) using a propagation time measurement of radio signals transmitted between the domestic appliances (110, 110-1, 110-2, 110-3).

5. Method (400) according to claim 4, wherein the radio signals are transmitted in pulses in the nanosecond range.

6. Method (400) according to one of claims 4 to 5, wherein the radio signals have a bandwidth of at least 500 megahertz and/or are in a range of 3.1 to 10.6 gigahertz.

7. Method (400) according to any of claims 4 to 6, wherein user data is transmitted by means of the radio signals, in particular identification information of the domestic appliances (110, 110-1, 110-2, 110-3).

8. Method (400) according to any of the preceding claims, comprising a step of receiving (406) the presence signal (317) from the user interface (115), physically activated by the user (P), of the activated domestic appliance (110, 110-1).

9. Method (400) according to any of the preceding claims, wherein in the determining step (416) it is determined whether the selected domestic appliance (110-2) corresponds to the activated domestic appliance (110, 110-1), wherein in the effecting step (418) an operation of the selected domestic appliance (110-2) is effected using the voice command signal (307) if it is determined in the determining step (416) that the selected domestic appliance (110-2) corresponds to the activated domestic appliance (110, 110-1).

10. Device (330) designed to carry out the steps of the method (400) according to any of the preceding claims in corresponding units (332, 334, 336, 338).

11. Domestic appliance (110, 110-1, 110-2, 110-3) comprising the following features:
a device (330) according to claim 10;
the user interface (115) for providing the presence signal (317) in response to physical activation by the user (P); and
the radio module (320) for providing the localisation data (325).

12. Domestic appliance (110, 110-1, 110-2, 110-3) according to claim 11, wherein the radio module (320) is an ultra-wideband radio module, in particular according to the IEEE 802.15.4z standard, and/or has a plurality of receiving antennas.

13. Computer program product comprising program code for carrying out the method (400) according to any of claims 1 to 9 when the computer program product is executed on a device (330).

14. Machine-readable storage medium on which the computer program according to claim 13 is stored.

## Revendications

1. Procédé (400) permettant de faire fonctionner au moins un appareil électroménager (110, 110-1, 110-2, 110-3), dans lequel le procédé (400) présente les étapes suivantes :
émission (412) d'un signal d'activation (342) pour l'activation d'un dispositif d'assistance vocale (105) en réponse à un signal de présence (317) provenant d'une interface utilisateur (115), actionnée physiquement par un utilisateur (P), d'un appareil électroménager (110, 110-1) actionné, dans lequel le signal de présence (317) représente une présence de l'utilisateur (P) à proximité de l'appareil électroménager (110, 110-1) actionné ;
lecture (414) d'un signal de commande vocale (307) provenant du dispositif d'assistance vocale (105) activé, dans lequel le signal de commande vocale (307) représente une commande vocale de l'utilisateur (P) pour faire fonctionner un appareil électroménager (110-2) sélectionné ;
détermination (416) du fait de savoir si l'appareil électroménager (110-2) sélectionné est disposé dans une relation de position prédéfinie par rapport à l'appareil électroménager (110, 110-1) actionné, en utilisant des données de localisation (325) provenant d'un module radio (320) de l'appareil électroménager (110, 110-1) actionné et/ou de l'appareil électroménager (110-2) sélectionné ; et
déclenchement (418) d'un fonctionnement de l'appareil électroménager (110-2) sélectionné en utilisant le signal de commande vocale (307) lorsque, à l'étape (416) de détermination, il est déterminé que l'appareil électroménager (110-2) sélectionné est disposé dans la relation de position prédéfinie par rapport à l'appareil électroménager (110, 110-1) actionné.

2. Procédé (400) selon la revendication 1, dans lequel la relation de position prédéfinie définit une liaison visuelle et/ou au moins une valeur seuil pour une distance (d) entre l'appareil électroménager (110, 110-1) actionné et l'appareil électroménager (110-2) sélectionné.

3. Procédé (400) selon l'une des revendications précédentes, comportant une étape (404) de génération d'un plan de localisation d'appareils électroménagers (110, 110-1, 110-2, 110-3) les uns par rapport aux autres en utilisant les données de localisation (325), dans lequel, à l'étape (416) de détermination, le plan de localisation est utilisé.

4. Procédé (400) selon l'une des revendications précédentes, comportant une étape (402) de définition des données de localisation (325) à partir de distances (d) et/ou d'angles entre des appareils électroménagers (110, 110-1, 110-2, 110-3) en utilisant une mesure de temps de propagation de signaux radio transmis entre les appareils électroménagers (110, 110-1, 110-2, 110-3).

5. Procédé (400) selon la revendication 4, dans lequel les signaux radio sont transmis en impulsions de l'ordre de la nanoseconde.

6. Procédé (400) selon l'une des revendications 4 à 5, dans lequel les signaux radio présentent une bande passante d'au moins 500 mégahertz et/ou sont compris dans une plage allant de 3,1 à 10,6 gigahertz.

7. Procédé (400) selon l'une des revendications 4 à 6, dans lequel des données utiles sont transmises au moyen des signaux radio, en particulier des informations d'identification des appareils électroménagers (110, 110-1, 110-2, 110-3).

8. Procédé (400) selon l'une des revendications précédentes, comportant une étape de réception (406) du signal de présence (317) en provenance de l'interface utilisateur (115), actionnée physiquement par l'utilisateur (P), de l'appareil électroménager (110, 110-1) actionné.

9. Procédé (400) selon l'une des revendications précédentes, dans lequel, à l'étape (416) de détermination, on détermine si l'appareil électroménager (110-2) sélectionné correspond à l'appareil électroménager (110, 110-1) actionné, dans lequel, à l'étape (418) de déclenchement, un fonctionnement de l'appareil électroménager (110-2) sélectionné est déclenché en utilisant le signal de commande vocale (307) si, à l'étape (416) de détermination, on détermine que l'appareil électroménager (110-2) sélectionné correspond à l'appareil électroménager (110, 110-1) actionné.

10. Dispositif (330) configuré pour exécuter les étapes du procédé (400) selon l'une des revendications précédentes dans des unités (332, 334, 336, 338) correspondantes.

11. Appareil électroménager (110, 110-1, 110-2, 110-3) présentant les caractéristiques suivantes :
un dispositif (330) selon la revendication 10 ;
l'interface utilisateur (115) pour la fourniture du signal de présence (317) en réponse à un actionnement physique par l'utilisateur (P) ; et
le module radio (320) pour la fourniture des données de localisation (325).

12. Appareil électroménager (110, 110-1, 110-2, 110-3) selon la revendication 11, dans lequel le module radio (320) est un module radio à bande ultralarge, en particulier selon la norme **IEEE** 802.15.4z, et/ou présente plusieurs antennes de réception.

13. Produit-programme informatique comportant un code de programme pour la mise en œuvre du procédé (400) selon l'une des revendications 1 à 9 lorsque le produit-programme informatique est exécuté sur un dispositif (330).

14. Support de stockage lisible par machine sur lequel est stocké le programme informatique selon la revendication 13.
